Europäisches Patentamt

European Patent Office

Office européen des brevets

(19)

(11) Veröffentlichungsnummer: **0 189 747 B1**

# EUROPÄISCHE PATENTSCHRIFT

(12)

(45) Veröffentlichungstag der Patentschrift: 02.10.91

(51) Int. Cl.⁵: **B60P 1/64**, B60P 1/48

(21) Anmeldenummer: 86100058.6

(22) Anmeldetag: 03.01.86

(54) **Wechselbehälter.**

(30) Priorität: 30.01.85 DE 8502412 U

(43) Veröffentlichungstag der Anmeldung:
06.08.86 Patentblatt 86/32

(45) Bekanntmachung des Hinweises auf die
Patenterteilung:
02.10.91 Patentblatt 91/40

(84) Benannte Vertragsstaaten:
AT CH DE LI NL SE

(56) Entgegenhaltungen:
DE-A- 1 900 616

(73) Patentinhaber: **Maschinenfabriken Bernard
Krone GmbH
Heinrich-Krone-Strasse 10
W-4441 Spelle(DE)**

(72) Erfinder: **Focks, Hubert
Erlenweg 36
W-4450 Lingen(DE)**

(74) Vertreter: **Busse & Busse Patentanwälte
Postfach 1226 Grosshandelsring 6
W-4500 Osnabrück(DE)**

## Beschreibung

Die Erfindung bezieht sich auf einen Wechselbehälter, insbesondere Wechselpritsche, für Lastkraftwagen und Anhänger gemäß dem Oberbegriff des Anspruchs 1.

Bei bekannten Wechselbehältern dieser Art haben die Außenlängsträger des Bodenrahmens eine erhebliche Höhe, die im allgemeinen bei etwa 160 mm liegt. Die Krantaschenbeschläge haben eine Höhe von etwa 100 mm und erstrecken sich dementsprechend etwa über den unteren Zweidrittelbereich der Außenlängsträger. Auch bei einer dichten, z.B. nur 5 mm betragenden Lage der unteren Randkante der hochgeklappten Seitenwände oberhalb der Oberfläche der Krantaschen erfordert die freie Abklappbarkeit der Seitenwände Scharniere mit Scharnierhebeln in der Länge von etwa 70 mm.

Der Erfindung liegt die Aufgabe zugrunde, einen Wechselbehälter der eingangs genannten Art zu schaffen, in der bei höherer Stabilität einen bezogen auf gleichbleibende Außenabmessungen größeren Laderaum und einen niedrigeren Ladungsschwerpunkt hat.

Zur Lösung dieser Aufgabe ist der Wechselbehälter ausgehend von einem solchen gemäß dem Oberbegriff des Anspruchs 1 gekennzeichnet durch die im kennzeichneden Teil des Anspruchs 1 angegebenen Merkmale. Hinsichtlich wesentlicher weiterer Ausgestaltungen wird auf die Ansprüche 2 bis 4 verwiesen.

Der erfindungsgemäße Wechselbehälter erbringt eine tiefer im Behälter liegende Ladefläche mit entsprechendem Raumgewinn und Absenkung des Ladungsschwerpunktes. Die geringe Höhenerstreckung der Krantaschenbeschläge ermöglicht eine erhebliche Verkürzung der Scharnierhebel, die bei auf die Innenseite der Seitenwände wirkenden Kräften dementsprechend geringeren Beanspruchungen unterliegen. Die Schutzplatte sichert den gefährdeten unteren Bereich der Seitenwände gegen Beschädigungen durch Greiferhaken beim Kranen des Wechselbehälters, wobei ein Eingriff zwischen Greiferhaken und Schutzleisten auf etwa durch Ladungsdruck ausgebeulte Seitenwände eine Rückstellkraft erbringt.

Ein Ausführungsbeispiel des Gegenstands der Erfindung ist in der Zeichnung näher veranschaulicht. In der Zeichnung zeigen:

Fig. 1    eine abgebrochene Seitenansicht eines Wechselbehälters nach der Erfindung im Bereich einer Krantasche, und

Fig. 2    einen Schnitt nach der Linie II-II in Fig. 1.

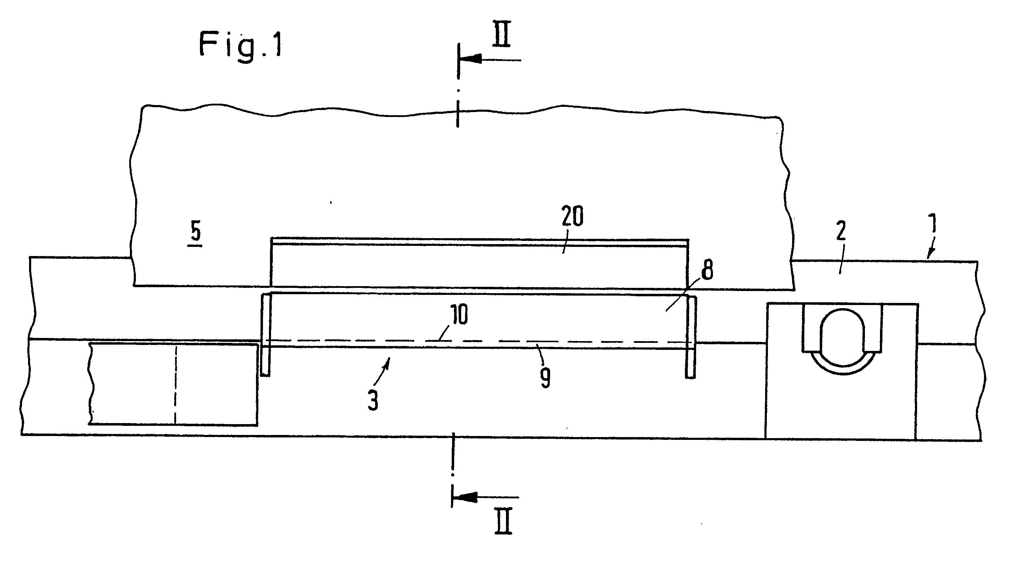

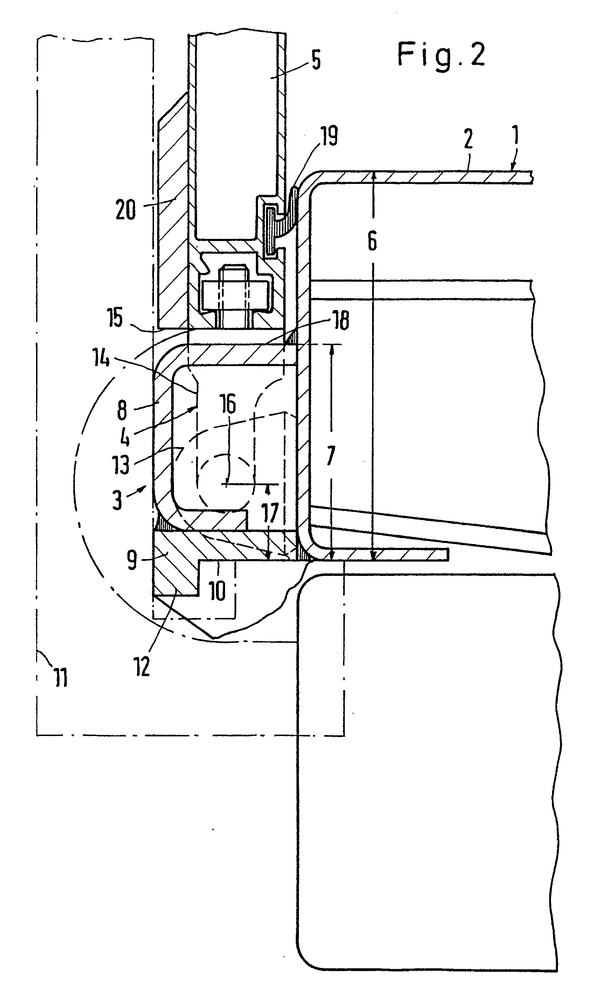

Der Wechselbehälter gemäß Fig. 1 und 2 bildet eine Wechselpritsche mit einem Bodenrahmen 1, dessen Außenlängsträger 2 außenseitig mit Krantaschenbeschlägen 3 und Scharnieren 4 für klappbare Seitenwände 5 verbunden sind. Die Außenlängsträger 2 des Bodenrahmens 1 sind als Niedrigprofilträger mit einer Höhe 6 von 100 mm ausgeführt, und die Oberfläche eines jeden Krantaschenbeschlages liegt etwa auf halber Höhe des zugehörigen Außenlängsträgers 2. Bei dem dargestellten Beispiel beträgt die Höhe 7 des aus den Profilteilen 8 und 9 bestehenden Krantaschenbeschlages 3 56 mm.

Die Bodenebene 10 der von dem Profilteil 9 gebildeten Krantasche, in die ein strichpunktiert angedeuteter Greiferhaken 11 eines Hebezeugs eingreift, ist außenseitig durch einen eine Sicherungsleiste bildenden Ansatz 12 begrenzt.

Die Scharniere 4 für die klappbare Anlenkung der Seitenwände 5 bestehen jeweils aus einem Scharnierlagergehäuse 13 und einem Scharnierhebel 14, der mit der unteren Schmalseite 15 der Seitenwand 5 verschraubt ist. Die Scharniere 4 sind so an den Außenlängsträgern 2 angebracht, daß die Scharnierachse 16 in einer Höhe 17 von 20 mm oberhalb der Bodenebene 10 gelegen ist, und die Scharnierhebel 14 haben dabei eine Länge von 40 mm. Dadurch sind die Scharnierhebel 14 außerordentlich bruchsicher, und die untere Schmalseite 15 der Seitenwand 5 erhält eine Lage in einem Abstand von 5 mm oberhalb der Oberfläche 18 des Krantaschenbeschlages 3.

Im unteren, neben dem oberen Teil des Außenlängsträgers 2 liegenden Bereich der Seitenwand 5 ist diese mit einer Dichtung 19 versehen, die sich in der dargestellten aufrechten Stellung der Seitenwand 5 an die Außenfläche des Außenlängsrahmens anlegt.

Im Bereich oberhalb der Krantaschenbeschläge 3 sind die Seitenwände 5 mit einer aufgesetzten, z.B. angeschraubten, Schutzleiste 20 versehen, die bevorzugt eine Höhe von zumindest etwa 60 mm aufweist. Die Schutzleiste besteht vorzugsweise aus Metall, kann jedoch grundsätzlich auch aus Gummi oder Kunststoff bestehen.

## Patentansprüche

1.    Wechselbehälter für Lastkraftwagen und Anhänger mit einem Bodenrahmen (1), dessen Außenlängsträger (2) außenseitig mit Krantaschenbeschlägen (3) und Scharnieren (4) für klappbare Seitenwände (5) verbunden sind, deren untere Schmalseite in hochgeklappter Stellung dicht oberhalb der Krantaschenbeschläge (3) und neben den Außenlängsträgern (2) des Bodenrahmens (1) liegt, dadurch gekennzeichnet, daß die Außenlängsträger (2) des Bodenrahmens (1) als Niedrigprofilträger ausgebildet sind, die Oberfläche (18) der Krantaschenbeschläge (3) etwa auf halber Höhe der Außenlängsträger (2) gelegen ist, und die Seitenwände (5) im Bereich oberhalb der Krantaschenbeschläge (3) mit einer aufgesetzten Schutzleiste (20) versehen sind, deren Außenfläche annähernd mit der Außenfläche der Krantaschenbeschläge (3) fluchtet.

2. Wechselbehälter nach Anspruch 1, dadurch gekennzeichnet, daß die Außenlängsträger (2) des Bodenrahmens (1) eine Höhe von etwa 100 mm haben.

3. Wechselbehälter nach Anspruch 1 oder 2, dadurch gekennzeichnet, daß die Schutzleiste (20) eine Höhe von etwa 60 mm aufweist.

4. Wechselbehälter nach einem der Ansprüche 1 bis 3, dadurch gekennzeichnet, daß die Scharnierhebel (14) der Scharniere (4) eine Länge von etwa 40 mm haben und die Scharnierachsen (16) etwa 20 mm oberhalb der Bodenebene (10) der Krantaschenbeschläge (3) angeordnet sind.

## Claims

1. An exchangeable container for lorries and trailers with a bottom frame (1), of which the outer longitudinal members (2) are on the outside connected to crane pocket fittings (3) and hinges (4) for folding side walls (5), of which the lower narrow side is, in the raised position, situated just above the crane pocket fittings (3) and alongside the longitudinal outer members (2) of the bottom frame (1), characterised in that the outer longitudinal members (2) of the bottom frame (1) are constructed as low profile members the surface (18) of the crane pocket fittings (3) being situated about half-way up the longitudinal outer members (2), the side walls (5) being provided in the region above the crane pocket fittings (3) with a fitted-on protective strip (20), the outer surface of which is virtually aligned with the outer surface of the crane pocket fittings (3).

2. An exchangeable container according to Claim 1, characterised in that the longitudinal outer members (2) of the bottom frame (1) are approx. 100 mm high.

3. An exchangeable container according to Claim 1 or 2, characterised in that the protective strip (20) is approx. 60 mm high.

4. An exchangeable container according to one of Claims 1 to 3, characterised in that the hinge levers (14) of the hinges (4) are approx. 40 mm long and in that the hinge pins (16) are disposed approx. 20 mm above the bottom level (10) of the crane pocket fittings (3).

## Revendications

1. Benne amovible pour camions et remorques, comportant un cadre de plancher (1), dont les longerons extérieurs (2) sont reliés extérieurement à des ferrures à logements de grutage (3) et à des charnières (4) destinées à des parois latérales rabattables (5), dont le petit côté inférieur en position rabattue vers le haut est disposé de manière étanche au-dessus des ferrures à logements de grutage (3) et à côté des longerons extérieurs (2) du cadre de plancher (1), caractérisée en ce que les longerons extérieurs (2) du cadre de plancher (1) ont la forme de profilés de hauteur réduite, la surface (18) des ferrures à logements de grutage (3) étant disposée à peu près à mihauteur des longerons extérieurs (2), et les parois latérales (5) étant pourvues, dans la zone située au-dessus des ferrures à logements de grutage (3), d'un parement de protection (20) dont les surfaces extérieures sont approximativement en ligne avec les ferrures à logements de grutage (3).

2. Benne amovible suivant la revendication 1, caractérisée en ce que les longerons extérieurs (2) du cadre de plancher (1) ont une hauteur d'environ 100 mm.

3. Benne amovible suivant la revendication 1 ou 2, caractérisée en ce que le parement de protection (20) a une hauteur d'environ 60 mm.

4. Benne amovible suivant l'une quelconque des revendications 1 à 3, caractérisée en ce que les bras (14) des charnières (4) ont une longueur d'environ 40 mm et les axes de charnières (16) sont disposés à environ 20 mm au-dessus du plan de la face inférieure (10) des ferrures à logements de grutage (3).

## Fig.1

II

5

20

8

2

1

10

9

3

EP 0 189 747 B1

II

EP 0 189 747 B1

# Fig.2